**Europäisches Patentamt**

**European Patent Office**

**Office européen des brevets**

(11) Veröffentlichungsnummer: **0 111 215**
**B1**

(12) **EUROPÄISCHE PATENTSCHRIFT**

(45) Veröffentlichungstag der Patentschrift: **18.02.87**

(21) Anmeldenummer: **83111712.2**

(22) Anmeldetag: **23.11.83**

(51) Int. Cl.⁴: **A 61 C 19/04,** G 01 D 5/34

(54) Vorrichtung zur dreidimensionalen Bestimmung der Relativbewegung zwischen einem ersten und einem zweiten Körper.

(30) Priorität: **26.11.82 DE 8233294 u**

(43) Veröffentlichungstag der Anmeldung:
**20.06.84 Patentblatt 84/25**

(45) Bekanntmachung des Hinweises auf die
Patenterteilung:
**18.02.87 Patentblatt 87/08**

(84) Benannte Vertragsstaaten:
**AT CH DE LI SE**

(56) Entgegenhaltungen:
**EP-A-0 062 192**
**US-A-3 922 654**
**US-A-4 014 097**

(73) Patentinhaber: **Burckhardt, Rainer**
**Mühlweg 49**
**D-8480 Weiden (DE)**

(72) Erfinder: **Burckhardt, Rainer**
**Mühlweg 49**
**D-8480 Weiden (DE)**

(74) Vertreter: **Graf, Helmut, Dipl.-Ing. et al**
**Greflinger Strasse 7 Postfach 382**
**D-8400 Regensburg (DE)**

Courier Press, Leamington Spa, England.

# Beschreibung

Die Erfindung bezieht sich auf eine Vorrichtung gemäß des ersten Teils des Patentanspruchs 1.

In der Technik allgemein besteht vielfach das Problem, die dreidimensionale Bewegung zwischen zwei Körpern oder Elementen zu erfassen bzw. zu messen und zu registrieren. Dieses Problem besteht insbes. auch in der Zahntechnik, wo es darum geht, die Bewegung des Unterkiefers gegenüber dem Oberkiefer eines Patienten zu messen und die dabei gewonnenen Daten festzuhalten.

Eine Vorrichtung zur dreidimensionalen Bestimmung der Bewegung des Unterkiefers bzw. der Unterkiefergelenke (Kondülen) ist bereits bekannt (US—A—4,014,097). Die bekannte Vorrichtung besteht aus einem am Unterkiefer festlegbaren unteren Bügel sowie aus einem am Kopf festlegbaren oberen Bügel, die sich jeweils mit Bügelarmen in den Bereich seitlich von den Kiefergelenken des Patienten erstrecken und dort die relativ zueinander bewegbaren Geberelemente zweier Meßgeber aufweisen. Mit den beiden Meßgebern werden die beim Bewegen des Unterkiefers auftretenden Bewegungskomponenten in horizontaler, vertikaler sowie in transversaler Richtung (Richtung der Kondylenachse) ermittelt, und zwar dadurch, daß die beiden an dem oberen Bügel befestigten Geberelemente jeweils vier elastisch verformbare, an einem Ende eingespannte blattfederartige Elemente mit jeweils einem Dehnungsmeßstreifen aufweisen, von denen die Oberflächenseiten eines blattfederartigen Elementes senkrecht zur horizontalen Achse, eines blattfederartigen Elementes senkrecht zur vertikalen Achse und zweier blattfederartige Elemente senkrecht zur transversalen Achse angeordnet sind. An den beiden, am unteren Bügel befestigten Geberelementen sind Stifte vorgesehen, die in den voranstehend genannten Achsen orientiert sind und von denen jeder gegen das freie Ende eines blattfederartigen Elementes einwirkt, so daß entsprechend den horizontalen, vertikalen und transversalen Bewegungskomponenten der Bewegung des Unterkiefers die einzelnen blattfederartigen Elemente verformt und die an diesen Elementen vorgesehenen Dehnungsmeßstreifen eine sich ändernden elektrischen Widerstand ergeben, aus welchem diesen Bewegungskomponenten entsprechende elektrische Signale in einer Meß- und Steuereinrichtung erzeugt werden. Die bekannte Vorrichtung ist vor allem in der Konstruktion aufwendig und erfordert eine sehr genaue Anordnung und Justierung der einzelnen blattfederartigen Elemente in den jeweiligen Ebenen an den am oberen Bügel vorgesehenen Geberelementen. Auch bei der Verwendung der bekannten Vorrichtung ist eine aufwendige Justierung der Geberelemente jedes Meßgebers relativ zueinander erforderlich.

Bekannt ist weiterhin eine Vorrichtung zur optischen Messung eines Weges (EP—A—0 062 192), die eine Lichtstrecke bestehend aus einer Lichtquelle und einem im Abbstand von dieser vorgesehenen Lichtdetektor sowie ein als Transmissionskeil ausgebildetes optisches Filter aufweist, welches in der Lichtstrecke angeordnet und senkrecht zu dieser verschiebbar ist. Diese bekannte Vorrichtung ist allerdings nur zur Messung der Bewegung in einer einzigen Achsrichtung geeignet.

Der Erfindung liegt die Aufgabe zugrunde, eine Vorrichtung aufzuzeigen, die bei einfachem Aufbau und bei einfacher Handhabung eine genaue und schnelle dreidimensionale Bestimmung der Relativbewegung zwischen zwei Körpern gestattet, wobei vor allem auch die lagerichtige Einstellung der Vorrichtung bzw. deren Teile in der für eine exakte Messung erforderlichen Weise ohne Probleme möglich ist.

Zur Lösung dieser Aufgabe ist eine Vorrichtung entsprechend dem kennzeichnenden Teil des Patentanspruches 1 ausgebildet.

Unter "Streuscheibe" ist im Sinne der Erfindung ein opitsches Filter (bzw. Filterbereich) zu verstehen, welches (unter Berücksichtigung eines bestimmten Lichtkegels für das von der Lichtquelle abgestrahlte Licht) beim Bewegen in Richtung der Lichtstrecke ein mehr oder weniger starkes Streuen des von der Lichtquelle ausgesandten Lichtes bewirkt, so daß die auf den Lichtdetektor auftreffende Lichtmenge von der jeweiligen Stellung der Streuscheibe (Abstand von der Lichtquelle oder vom Lichtdetektor) abhängig ist. Eine Bewegung de Streuscheibe in Richtung senkrecht zur Lichtstrecke (Verbindungslinie zwischen Lichtquelle und Lichtdetektor) bewirkt keine Änderung der auf den Lichtdetektor auftreffenden Lichtmenge und damit auch keine Änderung des -vom Lichtdetektor abgegebenen Signals. Mit Hilfe der die Streuscheibe aufweisenden Meßstrecke können also diejenigen Bewegungskomponenten gemessen werden, die in der der Lichtstrecke entsprechenden Raumachse ablaufen.

Die Bewegungskomponenten der beiden anderen Raumachsen werden durch die die Transmissionskeile aufweisenden Meßstrecken ermittelt. Unter "Transmissionskeil" ist im Sinne der Erfindung ein optisches Filter (bzw. Filterbereich) zu verstehen, welches in einer bestimmten, in der Filterebene liegenden Achsrichtung eine zunehmende Filterdichte aufweist, so daß beim Bewegen des Filters in dieser Achsrichtung senkrecht zur Lichtstrecke (Verbindungslinie zwischen Lichtquelle und Lichtdetektor) sich die auf den Lichtdetektor auftreffende Lichtmenge und damit auch das vom Lichtdetektor abgegebene Signal ändern, wobei eine Bewegung des Transmssionskeiles in Richtung der Lichtstrecke sowie eines Bewegungsenkrecht zu der Richtung der abnehmenden bzw. zunehmenden Filterdichte keine Änderung des vom Detektor abgegebenen Signals bewirkt.

Bei einer bevorzugten Ausführungsform de Erfindung sind die optischen Filter der ersten und zweiten Meßstrecke jedes Meßgebers als Transmissionskeile ausgebildet sind, während das optische Filter der dritten Meßstrecke eine Streu-scheibe ist. Die beiden Transmissionskeile der ersten und zweiten Meßstrecken jedes ersten Geberelementes sind dabei so angeordnet, daß ihre Achsrichtungen in denen die Filterdichte zunimmt, senkrecht zueinander und senkrecht zu sämtlichen Lichtstrecken des zugehörigen Meßgebers verlaufen, so daß durch zwei Lichtstrecken mit jeweils einem Transmissionskeil an jedem Meßgeber und einer Lichtstrecke mit Streuscheibe an wenigstens einem der beiden Meßgeber die Bewegungskomponenten in der vertikalen, horizontalen und transversalen bzw. lateralen Raumachse bestimmt werden können, obwohl die Lichtstrecken sämtlicher Meßstrecken in Richtung einer einzigen Raumachse parallel zueinander liegen und auch die verwendeten Filter an jedem ersten Geberelement in einer einzigen gemeinsamen Ebene oder aber in mehreren Ebenen parallel zueinander angeordnet sind. Hierdurch ergeben sich ein besonders einfacher Aufbau für die Meßgeber und dabei insbes. auch für deren erste Geberelemente sowie die Möglichkeit eines besonders einfachen Ausrichtens der Vorrichtung bei Verwendung.

Dient die Vorrichtung beispielsweise zur dreidimensionalen Bestimmung der Bewegung der Unterkiefers bzw der Unterkiefergelenke, wobei die die Streuscheibe aufweisende dritte Meßstrecke zur Bestimmung der transversalen Bewegungskomponente (in Richtung der Kiefergelenkachse) verwendet wird, so ist es grundsätzlich ausreichend, nur an einem Meßgeber eine dritte Meßstrecke bestehend aus der Lichtstrecke und der Streuscheibe vorzusehen, wenngleich die Verwendung von einer solchen dritten Meßstrecke an beiden Meßgebern hinsichtlich der Minimierung von Meßfehlern Vorteile bietet.

Grundsätzlich ist es bei der Erfindung möglich, für die Lichtstrecke jeder Meßstrecke an den Meßgebern jeweils eine gesonderte Lichtquelle vorzusehen, oder aber eine gemeinsame Lichtquelle für mehrere Meßstrecken zu verwenden. Um Verfälschungen des Meßergebnisses durch Umgebungslicht zu vermeiden, werden vorzugsweise Lichtquellen verwendet, die Licht im Infrarotbereich aussenden. Sämtliche optischen Filter an den ersten Geberelementen sind bevorzugt jeweils von unterschiedlichen Filterbereichen einer einzigen Filterscheibe gebildet.

Bei Verwendung der Vorrichtung zur dreidimensionalen Bestimmung der Relativbewegung der Unterkiefergelenke ist ein am Unterkiefer festlegbarer unterer Bügel mit zwei Bügelarmen sowie ein am Schädel bzw. Kopf festlegbarer oberer Bügel mit ebenfalls zwei Bügelarmen vorgesehen. Ein Bügelarm des oberen Bügels bildet dann mit einem Bügelarm des unteren Bügels jeweils ein Bügelarmpaar, wobei an dem Bügelarmen jedes Bügelarmpaares jeweils ein erstes sowie ein zweites Geberelement vorgesehen sind, und zwar bevorzugt an den Bügelarmen des unteren Bügels die ersten Geberelemente und an den Bügelarmen des oberen Bügels die zweiten Geberelemente. Die Einstellung bzw. Ausrichtung der Vorrichtung am Kopf des Patienten kann besonders einfach dann durchgeführt werden, wenn die zweiten Geberelemente jeweils in zwei senkrecht zueinander verlaufenden Raumachsen einstellbar an den zugehörigen Bügelarmen befestigt sind, und zwar vorzugsweise in Richtung der Längserstreckung des betreffenden Bügelarmes sowie in Richtung senkrecht hierzu bzw. senkrecht zu der von den beiden Bügelarmen bestimmten Ebene, wobei die Einstellung vor dem Meßvorgang vorzugsweise so erfolgt, daß die mit der Streuscheibe zusammenwirkende Lichtstrecke möglichst genau mit der Kiefer-Gelenkachse zusammenfällt, diese Achse zumindest jedoch zumindest schneidet. Diese Einstellung kann durch gezielte Bewegungen des Unterkiefers und Beobachtung der einzelnen, von den Meßstrecken gelieferten Signales sehr genau vorgenommen bzw. überprüft werden. Die beschriebene Einstellmöglichkeit der zweiten Geberelemente ist generelle von Bedeutung, und zwar unabhängig davon, wie die Einstellung bzw. Messung der Bewegungskomponenten erfolgt.

Weiterbildungen der Erfindung sind Gegenstand der Unteransprüche. Die Erfindung wird im Folgenden anhand der Figuren an einem Ausführungsbeispiel näher erläutert. Es zeigen:

Fig. 1 in perspektivischer Darstellung eine mögliche Ausführungsform der Vorrichtung zur dreidimensionalen Bestimmung der Bewegung eines Unterkiefers, nach dem Anbringen am Kopf eines Patienten;

Fig. 2 in Seitenansicht den oberen Bügel der Vorrichtung gemäß Fig. 1;

Fig. 3 in Teildarstellung und in einer gegenüber Fig. 2 um 90° gedrehten Ansicht ein insgesamt drei Meßstrecken aufweisenden Geberelement am Bügelarm des oberen Bügels der Vorrichtung gemäß Fig. 1;

Fig. 4 in Teildarstellung sowie in Seitenansicht ein mit einer Filterscheibe versehenes Ende eines Bügelarms des unteren Bügels;

Fig. 5 eine schematische Darstellung zur Erläuterung der Einstellmöglichkeit des Geberelementes nach Fig. 2 und 3 in zwei senkrecht zueinander verlaufenden Achsen (beispielsweise horizontale und vertikale Achse);

Fig. 6 in perspektivischer Teildarstellung den oberen Bügel mit einer an diesem Bügel befestigten Bißgabel zur Festlegung der Lage des oberen Bügels bezogen aud den Oberkiefer des Patienten;

Fig. 7 in schematischer Darstellung und in Ansicht von oben den Kopf des Patienten zusammen mit demjenigen Teil des Artikulators, der (Teil) zur Positionierung der Oberkiefer-Zahnreihen am Artikulator dient;

Fig. 8 in Seitenansicht und im Schnitt einen Halteblock, welcher bei der "Übertragung" auf den Artikulator anstelle der zweiten Geberelemente verwendet wird;

Fig. 9 bis 11 verschiedene Darstellung zur Erläuterung der Wirkung der Streu-Scheibe.

Die in den Figure darstellte Vorrichtung zur dreidimensionalne Bestimmung der Bewegung des Unterkiefers bzw. des Unterkiefergelenkes besteht im wesentlichen aus einem oberen Bügel 1, der am Schädel des Patienten 2 festlegbar ist sowie aus einem unteren Bügel 3, der am Unterkiefer befestigt werden kann.

Der obere Bügel 1 ist von einer Querstange 4 und zwei Bügelarmen 5 und 6 gebildet, welch letztere mit jeweils einem Ende an der Querstange befestigt sind und sich quer bzw. senkrecht zu dieser Querstange erstrecken, so daß die Querstange 4 und die Bügelarme 5 und 6 eine brillengestellartige Anordnung bilden.

In der Mitte ist auf der Querstange 4 eine Profilrolle 7 drehbar und/oder verschiebbar befestigt, wobei diese Profilrolle eine ringförmige Ausnehmung aufweist, deren Querschnittsprofil such um den Umfang der Rolle 7 so verändert, daß dieses Querschnittsprofil durch Drehen der Profilrolle 7 dem Querschnittsprofil der Nase 2' des Patienten 2 angepaßt werden kann.

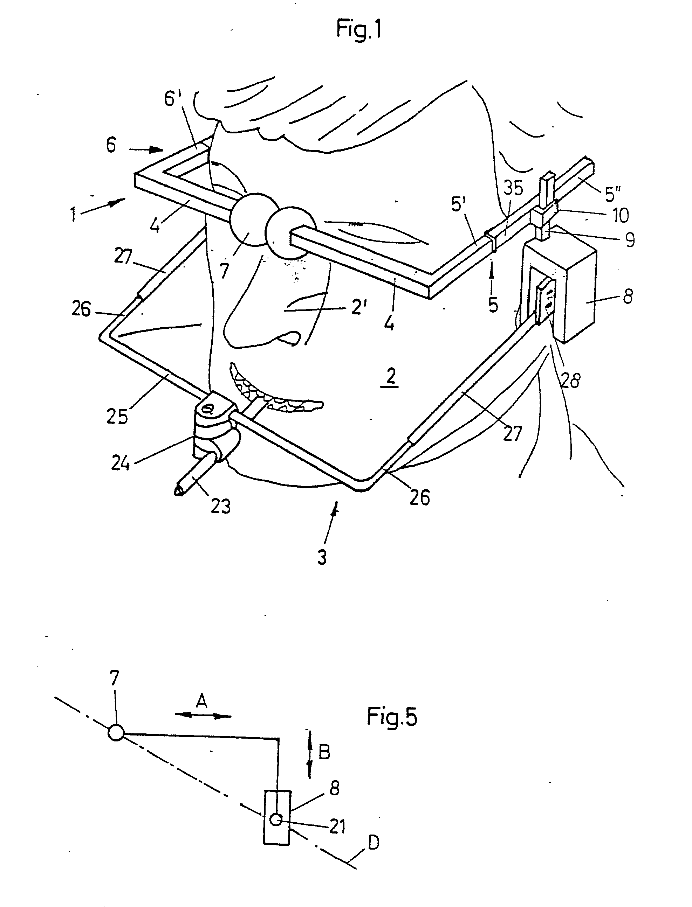

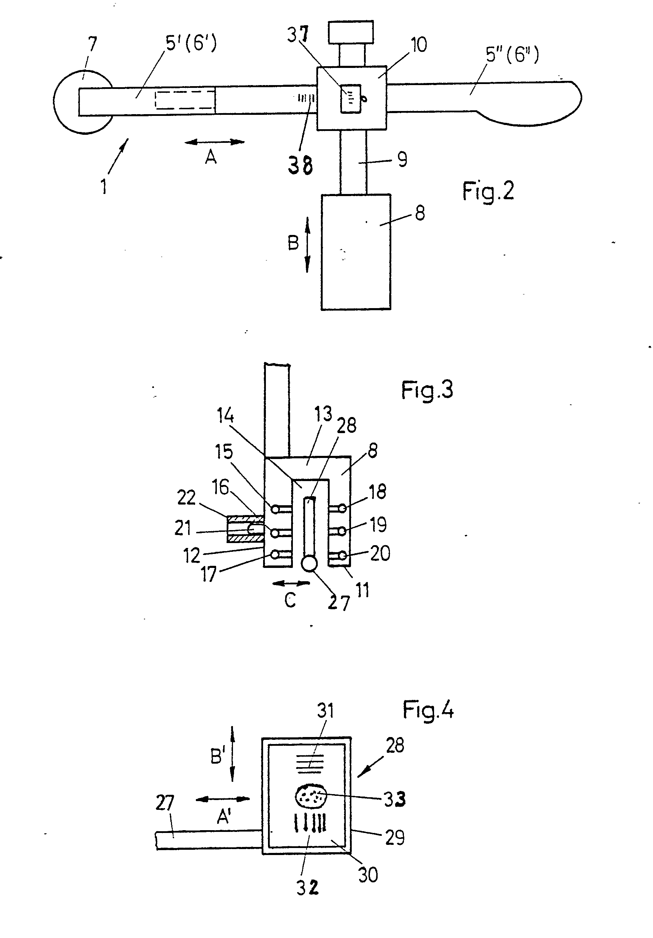

Wie insbesondere die Fig. 1 und 2 zeigen, bestehen die beiden Bügelarme 5 und 6 jeweils aus zwei Teilen 5' und 5'' bzw. 6' und 6'', die derart miteinander verbunden sind, daß eine Einstellung der Teile 5' und 5'' bzw. 6' und 6'' relativ zueinander in Richtung der Bügelarmlängsachse möglich ist, wie dies in der Fig. 2 mit dem Doppelpfeil A angedeutet ist.

Die Einstellung der beiden Teile 5' und 5'' bzw. 6' und 6'' wird grundsätzlich dadurch erreicht, daß einer der beiden Teile in eine Führung des anderen Teils eingreift. Die beiden Teile können beispielsweise jeweils teleskopartig ineinander verschiebbar ausgebildet sein. In der einmal getroffenen Enstellung können die beiden Teile 5' und 5'' bzw. 6' und 6'' z.B. durch nicht näher dargestellte Elemente, z.B. Klemm-Mittel fixiert werden.

Wie die Fig. 1 und 2 weiterhin zeigen, ist der Teil 5' bzw. 6' mit seinem der Teil 5'' bzw. 6'' abgewendeten Ende mit der Querstange 4 verbunden, wobei diese Verbindung ebenfalls einstellbar ausgebildet sein kann. Am Teil 5'' bzw. 6'' ist jeweils ein Geberelement 8 derart befestigt, daß sich dieses Geberelement bei der für die Fig. 1 und 2 gewählten Darstellung unterhalb des betreffenden Bügelarmes 5 oder 6 befindet.

Die beiden Geberelemente 8, die zusammen mit jeweils einem als Filterscheibe 28 ausgebildeten weiteren Geberelement zwei Meßgeber mit Meßstrecken zur Bestimmung der Bewegung des Unterkiefers bzw. des Unterkiefergelenkes in den horizontalen, vertikalen sowie transversalen Achsen bilden, sind bei der dargestellten Ausführungsform mit jeweils einem Hilfsarm 9 am Teil 5'' bzw. 6'' gehalten, wobei die Anordnung so getroffen ist, daß jedes Geberelement 8 in Richtung senkrecht zur Längserstreckung des zugehörigen Bügelarmes 5 bzw. 6 sowie in Richtung senkrecht zu der von den Bügelarmen gebildeten Ebene (in Richtung des Doppelpfeiles B der Fig. 2) relativ zu dem Bügelarm 5 bzw. 6 eingestellt werden kann. Dies wird bei der dargestellten Ausführungsform dadurch erreicht, daß der betreffende Hilfsarm 9 in Längsrichtung in einer Führung 10 am Teil 5'' bzw. 6'' einstellbar geführt ist. Die jeweils getroffene Einstellung kann auch hier wiederum mit nicht näher dargestellten Mitteln fixiert werden.

Wie die Fig. 3 zeigt, ist jedes Geberelement 8 im wesentlichen U-förmig ausgebildet und besteht aus zwei Schenkeln oder schenklartigen Abschnitten 11 und 12, die über ein Joch 13 miteinander verbunden sind. Die Anordnung ist dabei so getroffe, daß der von den Abschnitten 11, 12 und 13 begrenzte Raum 14 nach unten hin sowie zu zwei Seiten offen ist, welch letzterer senkrecht zu der durch den Doppelpfeil A gekennzeichneten Achse liegen. Weiterhin ist die Anordnung so getroffen, daß der Abschnitt 12 jedes an einem Bügelarm vorgesehenen Geberelementes 8 dem anderen Bügelarm näher liegt als der Abschnitt 11 dieses Geberelementes, d.h. z.B. der Abschnitt 12 des am Bügelarm 5 vorgesehenen Geberelementes 8 dem Bügelarm 6 näherliegt als der Abschnitt 11 des am Bügelarm 5 vorgesehenen Geberelementes 8. Bei der dargestellten Ausführungsform sind im Abschnitt 12 jedes Geberelementes 8 in Richtung der durch den Doppelpfeil B gekennzeichneten Achse übereinander drei Lichtquellen 15, 16 und 17 angeordnet, die vorzugsweise Licht im Infrarotbereich in den Raum 14 aussenden, wobei im Abschnitt 11 jedes Geberelementes 8 der Lichtquelle 15 ein Lichtdetektor 18, der Lichtquelle 16 ein Lichtdetektor 19 und der Lichtquelle 17 ein Lichtdetektor 20 gegenüberliegend angeordnet sind, und zwar derart, daß jede Lichtquelle mit ihrem zugehörigen Detektor eine Licht- bzw. Meßstrecke bildet, die in einer Achse verläuft, welche senkrecht zu den beiden Achsen gemäß den Pfeilen A und B liegt und in der Fig. 3 durch den Doppelpfeil C gekennzeichnet ist. Die Lichtquellen 15, 16 und 17 sind beispielsweise Leuchtdioden, während die Lichtdetektoren 18, 19 und 20 Fotodioden, Fotowiderstände oder Fototransistoren sind. Grundsätzlich ist es möglich, auf die von der Lichtquelle 16 und dem Detektor 19 gebildete und zwischen den beiden anderen Meßstrecken angeordnete Meßstrecke für die Bewegungskomponente in Richtung der Kiefergelenkachse bei einem Geberelement 8 zu verzichten, wenngleich die Verwendung einer solchen Meßstrecke an beiden Geberelementen 8 eine Meßmethode ermöglicht, mit der diese Bewegungskomponente weite genauer bestimmt werden kann.

An der dem Raum 14 abgewedeten Außenfläche des Abschnittes 12 ist bei der dargestellten Ausführungsform an jedem Geberelement 8 eine Lichtquelle 21 vorgesehen, die Licht im sichtbaren Bereich abgibt. Diese Lichtquelle ist in der Innenbohrung eines hülsenartigen Elementes 22 angeordnet, welches von der dem Raum 14 abgewendeten Fläche des Abschnittes 12 wegsteht. Die Anordnung ist so getroffen, daß die Lichtquelle 21 auf einer dem hülsenartigen Element benachbart liegenden Fläche einen Lichtpunkt erzeugt, der zur Markierung der Scharnierachse des Kiefergelenkes am Kopf des Patienten dienen kann.

Zur Befestigung des unteren Bügels 3 am Unterkiefer dient bei der dargestellten Ausführungsform eine Bißgabel bzw. ein Löffel 23, der beispielsweise mit Hilfe einer nicht näher dargestellten Schiene an der dortigen Zahnreihe befestigt werden kann. Das freie Ende des Löffels 23 ist über eine Doppelklemme 24 an dem mittleren Bereich einer Querstange 25 des unteren Bügels 3 befestigt. Diese Querstange weist an ihren beiden Enden Abwinklungen 26 auf, wobei an jeder Abwinklung ein stangenartiges Element 27 abnehmbar und vorzugsweise in Längsrichtung und in vertikaler Richtung einstellbar mit einem ende gehalten ist. Die stangenartigen Elemente 27 bilden die beiden Bügelarme des unteren Bügels 3.

An dem der Querstange 25 entfernt liegenden Ende trägt jedes Element 27 eine Filterscheibe 28, welche entsprechend der Fig. 4 im wesentlichen von einem Rahmen 29 und einem in diesem angeordneten Filterglas 30 gebildet ist.

Jede Filterscheibe 28 weist wenigstens zwei Filterbereiche 31 und 32 auf, die als Absorptionsbzw. Transmissionsfilter (Transmissionskeile) wirken und jeweils in einer in der Filterebene liegenden Achsrichtung eine zunehmende Filterdichte besitzen. Diese Achsrichtungen sind in der Fig. 4 durch die Doppelpfeile A' und B' gekennzeichnet, wobei die Filterdichte des Filterbereichs 31 in der durch den Doppelpfeil B' gekennzeichneten Achsrichtung und die Filterdichte des Filterbereiches 32 in der durch den Doppelpfeil A' gekennzeichneten Achsrichtung zunimmt. Die beiden Filterscheiben 28 besitzen zusätzlich noch einen dritten Filterbereich 33, der als Streufilter bzw. Streuscheibe wirkt und zwischen den Filterbereichen 31 und 32 vorgesehen ist.

Die Handhabung er dargestellten Vorrichtung läßt sich, wie folgt, beschreiben:

Der obere Bügel 1 wird entsprechend Fig. 1 auf den Kopf des Patienten derart aufgesetzt, daß sich die Querstange 4 mit der Rolle 7 an der Nase 2' abstützt, während die Bügelarme 5 und 6 brillenbügelartig mit ihren freien Enden im Bereich der Ohren am Kopf des Patienten 2 anliegen und sich auf den Ohren abstützen. Nach dem Festlegen des Löffels 23 am Unterkiefer des Patienten 2 wird an diesem Löffel der untere Bügel 3 befestigt. Anschließend werden an die Abwirklungen 26 der Querstange 25 die Elemente 27 derart angebracht, daß die Filterscheibe 28 jedes Elementes 27 in den Raum 14 eines Geberelementes 8 hineinreicht und dabei mit seiner Filterfläche möglichst senkrecht zu der durch den Doppelpfeil C gekennzeichneten Raumachse liegt, wobei eventuell durch entsprechende Einstellung der Geberelemente 8 und/oder durch entsprechende Justierung der Elemente 27 und/oder durch entsprechende Justierung der Querstange 25 am Löffel 23 dafür gesorgt wird, daß der Filterbereich 31 jeder Filterscheibe 28 im Bereich der von der Lichtquelle 15 und dem Detektor 18 gebildeten Lichtstrecke, der Filterbereich 32 jeder Filterscheibe im Bereich der von der Lichtquelle 17 und dem Detektor 20 gebildeten Lichtstrecke sowie der Filterbereich 33 im Bereich der von der Lichtquelle 16 und dem Detektor 19 gebildeten Lichtstrecke eines Geberelementes 8 liegen und außerdem die Achsrichtung A' und B' im wesentlichen in Richtung der Achsen angeordnet sind, die durch die Doppelpfeile A und B gekennzeichnet sind. Um einen eindeutigen Bezugswert für die dreidimensionale Bestimmung der Bewegung des Unterkiefers zu erhalten und die Lage dieses Unterkiefers sowie des Oberkiefers bezogen auf die Kiefergelenke später auf einen Artikulator übertragen zu können, wird zunächst die Scharniergelenkachse des Unterkiefers festgelegt. Dies erfolgt dadurch, daß der Patient 2 den Unterkiefer relativ zum Schädel im Sinne einer Mundöffnungs- und Schließbewegung bewegt. Hierbei werden die Filterscheiben 28 relativ zu den Geberelementen 8 in den Licht; bzw. Meßstrecken bewegt, so daß die Lichtdetektoren Signale liefern, die in einer mit diesen verbundenen, nicht näher dargestellten elektrischen Meß; und Auswertungseinrichtung als Bewegungskomponenten in der horizontalen Achse (Pfeil A), in der vertikalen Achse (Pfeil B) und in der transversalen Achse (Pfeil C) zur Anzeige gebracht werden. Durch entsprechendes Justieren der beiden Geberelemente 8 relativ zu den Bügelarmen 5 und 6 wird dann dafür gesorgt, daß beim reinen Öffnen und Schließen des Mundes keine Bewegungskomponenten mehr um die horizontale und vertikale Achse angezeigt werden. Sobald dieser Zustand erreicht ist, liegen die Lichtquellen 21 sowie die von den Lichtquellen 16 und zugehörigen Lichtdetektoren 19 gebildeten Lichtstrecken genau an den beiden Enden der Scharnierachse des Kiefergelenkes. Diese beiden Enden können dann mit Hilfe der von den Lichtstrahlen 21 erzeugten Lichtpunkte im Kiefergelenkbereich an der Haut des Patienten markiert werden.

Nach der beschriebenen Justierung der Vorrichtung kann mit dieser die Bewegung des Unterkiefers, d.h. die jeweilige Verlagerung der Scharnierachse bei Kaubewegungen usw. bestimmt werden, wobei die entsprechenden werte von der Meß- und Auswerteinrichtung angezeigt und/oder gespeichert werden.

Die Lichtdetektoren 18 liefern dabei in Verbindung mit den Filterbereichen 31 aufgrund der sich beim Bewegen der Filterscheiben 28 ändernden Lichttransmission die vertikalen Komponenten der Unterkieferbewegung, während die Lichtdetektoren 20 in Verbindung mit den Filterbereichen 32 aufgrund der sich beim Bewegen der Filterscheiben 28 ändernden Licht-Transmission Signale abgeben, die den horizontalen Komponenten der Unterkieferbewegung entsprechen. Die transversale Komponente der Unterkieferbewegung, d.h. die Bewegungskomponente in Richtung der Scharnierachse wird mit Hilfe der Lichtdetektoren 19 in Verbindung mit den Filterbereichen 33 dadurch festgestellt, daß diese Filterbereiche je nach Abstand der Filterscheiben 28 von der Lichtquelle 16 bzw. von dem Detektor 19 eine mehr oder weniger starke Streuung des Lichtes verursacht, so daß das von dem Detektor 19 abgegebene Signal ein Maß für die Bewegung der jeweiligen Filterscheibe 28 in Richtung der durch den Doppelpfeil C gekennzeichneten Achse ist, welche nach dem Justieren der Vorrichtung in der oben beschriebenen Weise im wesentlichen mit der Scharnierachse zusammenfällt.

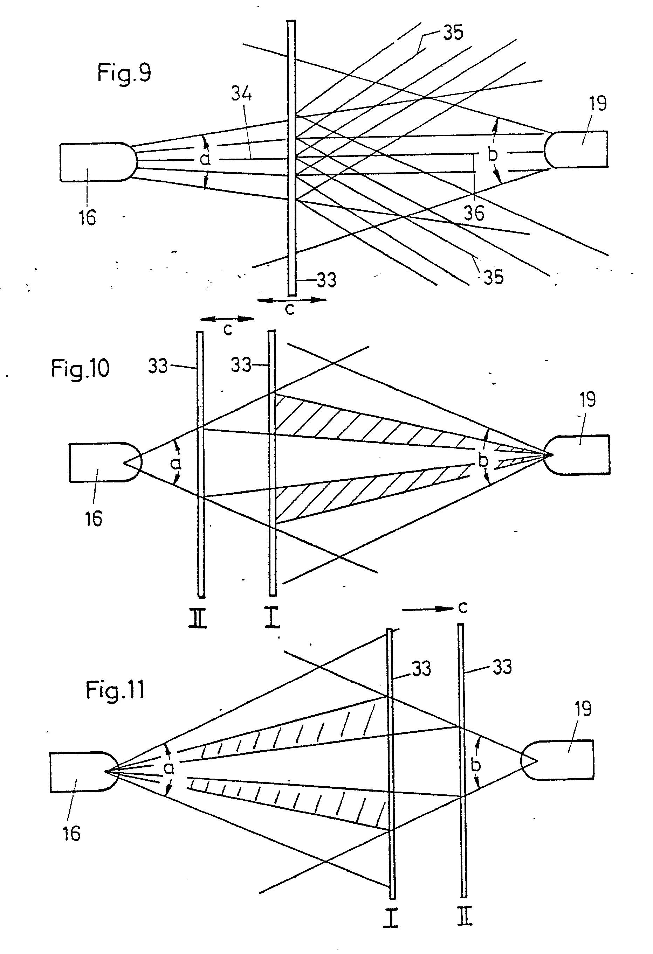

Die Wirkungsweise der die Filterbereiche 33 (Streuscheibe) aufweisenden Meßstrecken 16—19 geht aus den Fig. 9 bis 11 deutlich hervor, in denen die Lichtquelle 16 und der zugehörige Detektor 19 zusammen mit dem als Streuscheibe wirkenden Filterbereich 33 schematisch dargestellt sind. Die Lichtquelle 16 ist so ausgebildet, daß sich für den austretenden Lichtketel ein Winkel a ergibt, während der Detektor 19 einen Öffnungswinkel b aufweist. Die Fig. 9 zeigt, daß der zunächst gerichtete bzw. als Lichtkegel aus der Lichtquelle 16 austretende Lichtstrahl 34 in der Streuscheibe 33 teilweise gestreut wird (gestreute Lichtstrahlen 35), wobei die gestreuten Lichtstrahlen 35 nicht vom Detektor 19 erfaßt werden, sondern nur die nach dem Austritt aus der Streuscheibe 33 auf den Detektor 19 auftreffenden Lichtstrahlen 36, deren Intensität kleiner ist als die Intensität der Lichtstrahlen 34. Näherungsweise ist die von der Lichtstrahlen 34 auf der Streuscheibe 33 erzeugte beleuchtete und im Öffnungswinkel b des Detektors liegende Fläche ein Maß für die vom Detektor 19 festgestellte Lichtintensität.

In der Fig. 10 ist der Fall dargestellt, daß die Streuscheibe 33 der Lichtquelle 16 näherliegt als dem Detektor 19. Wird die Streuscheibe aus ihrer in Fig. 10 mit I bezeichneten Stellung entsprechend dem Pfeil C in die Stellung II bewegt, so ändert sich die Intensität des auf den Detektor 19 auftreffenden Lichtes entsprechend dem in der Fig. 10 schraffiert angegebenen Bereich. Ähnlich liegen die Verhältnisse bei einer Anordnung der Streuscheibe 33 in der Nähe des Detektors 19 (Fig. 11). Wird die Streuscheibe dort aus ihrer Stellung I in die Stellung II (entsprechend dem Pfeil C) bewegt, so ergibt sich unter Berücksichtigung des Öffnungswinkels b eine Änderung der Intensität des auf den Detektor 19 auftreffenden Lichtes, die (Änderung) ebenfalls dem schraffierten Bereich entspricht. Es hat sich gezeigt, daß sich eine sehr lineare Abhängigkeit zwischen dem Abstand der Streuscheibe 33 von der Lichtquelle 16 und dem vom Detektor 19 gelieferten Signal erreichen läßt, wenn die Streuscheibe 33 entweder in der linken oder rechten Hälfte der Meßstrecke 16—19 angeordnet ist. Nur bei einer Anordnung unmittelbar im mittleren Bereich wäre diese Abhängigkeit nicht linear.

Da nur die von der Lichtquelle 16 und dem Detektor 19 gebildete Licht- bzw. Meßstrecke nach dem Justieren der Vorrichtung genau im Bereich der Scharnierachse des Kiefergelenkes liegt, während die beiden anderen Lichtstrecken gegenüber der Scharnierachse versetzt sind, sind rein theoretisch gewisse Meßfehler möglich. Da die Lichtquellen 15 und 17 sowie die zugehörigen Lichtdetektoren 18 und 20 jedoch sehr dicht an der Meßstrecke 16—19 angeordnet werden können, sind derartige, rein theoretische Meßfehler so klein und daher praktisch ohne Bedeutung.

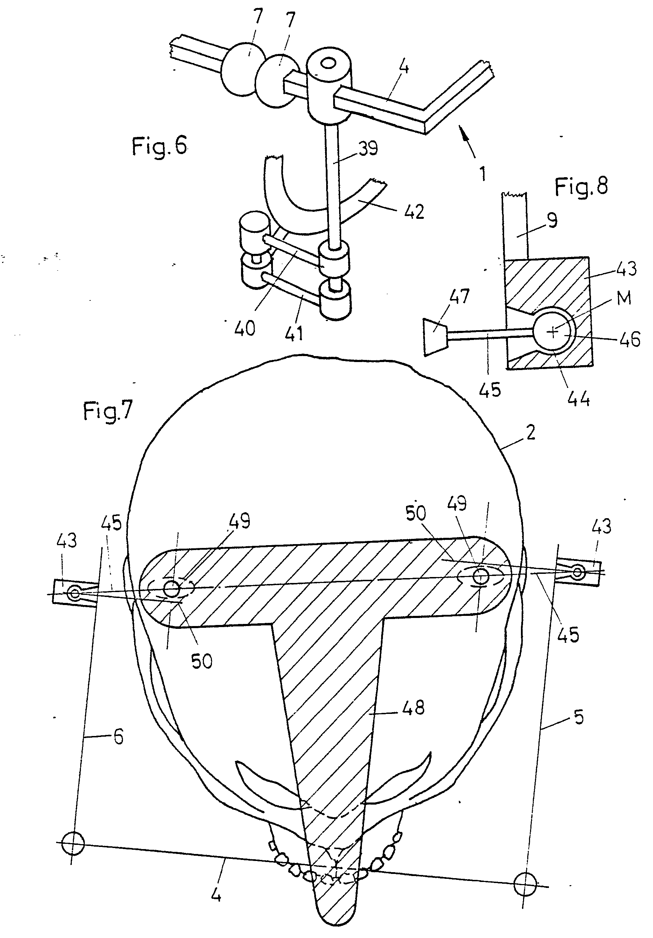

Für die Erzielung optimaler Meßergebnisse sowie auch zur Vereinfachung der Justierung der Vorrichtung ist es zweckmäßig, die Filterbereiche 31 und 32 bzw. die sich ändernde Filterdichte dieser Bereiche so auszubilden, daß sich beim Bewegen der Filterscheiben 28 in den Lichtstrecken eine Lichttransmission ergibt, die linear mit der Bewegung der Filterscheiben 28 in der vertikalen und horizontalen Achse ansteigt bzw. abnimmt. Mit Hilfe von Ablese- bzw. Einstellskalen 37 und 38 (Fig. 2) kann die Verstellung der Geberelemente 8 in den beiden Achsen A und B bezogen auf einen Bezugswert ermittelt werden, wobei es dann auch möglich ist, die in der Fig. 5 mit D gekennzeichnete und in der Praxis vielfach verwendete Bezugsebene zu ermitteln bzw. anzugeben, die durch den Auflagepunkt für die Rolle 7 an der Nase 2' und durch die beiden Enden der Scharnierachse festgelegt ist.

Um die Lage des Obkiefers bzw. der dortigen Zahnreihen bezüglich der Kiefergelenke so festzulegen, daß die entsprechende Übertragung auf einen Artikulator zugleich mit dem oberen Bügel 1 erfolgen kann, ist nach der in der Fig. 6 dargestellten Ausbildung an der Querstange 4 eine vertikale Stange 39 befestigt, die an ihrem nach unten ragenden Ende über Verbindungsstangen 40 und 41 einen Löffel bzw. eine Bißgabel 42 für den Oberkiefer trägt. Bei dieser Ausbildung sind die beiden Geberelemente 8 vorzugsweise abnehmbar an dem Hilfsarm 9 befestigt, beispielsweise mit Hilfe von nicht näher dargestellten Schrauben, und können jeweils gegen einen Halteblock 43 ausgetauscht werden, so daß dann jeder Hilfsarm 9 einen derartigen Block 43 trägt. Jeder Halteblock 43 besitzt an seiner den Kopf des Patienten 2 bzw. dem anderen Bügelarm zugewendeten Seite eine Ausnehmung 44, in welcher eine Stange 45 mit einem Ende (Kugel 46) kugelgelenkartig gehalten ist, wobei die Ausbildung und Befestigung des Halteblockes 43 am jeweiligen Hilfsarm so getroffen sind, daß sich der Mittelpunkt M des Kugelgelenks auf einem räumlichen Punkt legt, der vor dem Austrauschen des Geberelementes 8 gegen den Halteblock 43 zwischen der Lichtquelle 16 und dem Detektor 19 lag. An ihrem anderen Ende besitzt jede Stange 45 ein Halte-oder Kupplungsstück 47, mit welchem die Stange 45 an einem der Kiefergelenkachse entsprechenden Punkt des Artikulators befestigt werden kann.

In der Fig. 7 sind der obere Bügel 1, die beiden an diesem befestigten Halteblöcke 43, die Stangen 45 sowie eine Halteplatte 48 eines Artikulators schematisch dargestellt, und zwar zusammen mit einer Darstellung des Schädels des Patienten 2.

Weiterhin sind in der Fig. 7 auch die Nachbildungen 49 der Kiefergelenke am Artikulator angegeben. Die Linien 50 zeigen den Verlauf, den die Meßstrecken 16/19 an sich bei der getroffenen Einstellung des oberen Bügels bzw. der Geberelemente 8 hätten. Da die beiden Enden der Kiefergelenk-Scharnierachse zwar auf den beiden genannten Meßstrecken liegen bzw. nach dem Austausch der Geberelement gegen die Haltebökke 43 durch die Mittelpunkte M bestimmt sind, jedoch die Achsen der Meßstrekken 16/19 (Linien 50) nicht unbedingt, wie die Fig. 7 zeigt, achsgleich mit der Scharnierachse liegen, ist mit Hilfe der die Kugelgelenke 44/46 aufweisenden Stangen 45 eine lagerichtige "Übertragung" auf den Artikulator möglich. Es versteht sich, daß an diesem bzw. an der dort vorgesehenen Platte 48 im Bereich der Nachbildungen 49 für die Kiefergelenke Anlageflächen oder Kupplungselemente für die Anlage- oder Kupplungsstücke 47 vorgesehen sind. Durch die mit den Stangen 45 versehenen Halteblöcke 43 wird die Übertragung auf den Artikulator wesentlich vereinfacht und ist auch bei einer unsymmetischen Einstellung der Geberelemente 8 bzw. der Halteblöcke 43 sehr präzise.

## Patentansprüche

1. Vorrichtung zur dreidimensionalen Bestimmung der Relativbewegung zwischen einen ersten und einem zweiten Körper, vorzugsweise zur dreidimensionalen Bestimmung der Bewegung des Unterkiefers bzw. der Unterkiefergelenke eines Patienten, mit wenigstens zwei im räumlichen Abstand voneinander vorgesehenen Meßgebern, von denen jeder von einem ersten Geberelement (28) sowie von einem zweiten Geberelement (8) gebildet ist, die relativ zueinander bewegbar sind und von denen das erste Geberelement (28) jedes Meßgebers am ersten Körper, vorzugsweise am Unterkiefer des Patienten, und das zweite Geberelement (8) jedes Meßgebers am zweiten Körper, vorzugsweise am Schädel des Patienten festlegbar ist, sowie mit einer ersten und zweiten Meßstrecke an jedem Meßgeber, die jeweils zwischen dem ersten und zweiten Geberelement (28) gebildet sind und von denen die erste Meßstrecke zur Bestimmung der Relativbewegung zwischen dem ersten und zweiten Geberelement (28, 8) des betreffenden Meßgebers in der horizontalen Achse (1) und die zweite Meßstrecke zur Bestimmung der Relativbewegung zwischen dem ersten und dem zweiten Geberelement (28, 8) des betreffenden Meßgebers in der vertikalen Achse (B) dienen, wobei wenigstens einer der zwei Meßgeber eine dritte, zusätzliche und ebenfalls zwischen dem ersten und dem zweiten Geberelement (28, 8) dieses Meßgebers gebildete dritte Meßstrecke aufweist, die zur Beistimmung der Relativbewegung zwischen dem ersten und dem zweiten Geberelement (28, 8) dieses die dritte Meßstrecke aufweisenden Meßgebers in einer transversalen Achse (C) dient, welche senkrecht zur horizontalen Achse (A) sowie senkrecht zur vertikalen Achse (B) verläuft, dadurch gekennzeichnet, daß die Meßstrecken von an den zweiten Geberelementen (28) vorgesehenen Lichtstrecken, von denen jede einen Lichtdetektor (18, 19, 20) mit im Abstand von diesen vorgesehener Lichtquelle (15, 16, 17) aufweist sowie von an den ersten Geberelementen (8) vorgesehenen optischen Filtern (31, 32, 33) gebildet sind, von denen jedes jeweils in einer Lichtstrecke angeordnet ist, daß wenigstens ein optisches Filter (33) eine Streuscheibe ist, die mit ihrer Ebene senkrecht zu der Achsrichtung liegt, in der die Relativbewegung zwischen dem ersten und dem zweiten Geberelement (28, 8) durch die jeweilige Meßstrecke bestimmt wird, daß die restlichen optischen Filter (31, 32) als Transmissionskeile mit einer in derjenigen Achsrichtung zunehmenden Filterdichte aufweist, in der die Relativbewegung zwischen dem ersten und dem zweiten Geberelement (28, 8) durch die jeweilige Meßstrecke bestimmt wird, daß die optischen Filter (31, 32, 33) an jedem ersten Geberelement (28) in einer gemeinsamen Ebene angeordnet sind, un daß die Lichtstrecken an jedem zweiten Geberelement (8) parallel zueinander sowie parallel zu den Lichtstrecken an dem zweiten Geberelement (8) des jeweils anderen der beiden Meßgeber liegen.

2. Vorrichtung nach Anspruch 1, dadurch gekennzeichnet, daß die optischen Filter (31, 32) der ersten und zweiten Meßstrecke jedes Meßgebers als Transmissionskeile ausgebildet sind, und daß das optische Filter (33) der dritten Meßstrecke eine Streuscheibe ist.

3. Vorrichtung nach Anspruch 1 oder 2, dadurch gekennzeichnet, daß insbesondere bei ihrer Verwendung zur dreidimensionalen Bestimmung der Bewegung des Unterkiefers bzw. der Unterkiefergelenke ein am Unterkreifer festlegbarer unterer Bügel (3) mit zwei Bügelarmen (27) sowie ein am Schädel festlegbarer oberer Bügel (1) mit ebenfalls zwei Bügelarmen (5, 6) vorgesehen sind, daß jeweils ein Bügelarm (5, 6) des oberen Bügels (1) mit einem Bügelarm (27) des unteren Bügels (3) ein Bügelarmpaar bildet, und daß an einem Bügelarm (27) jedes Bügelarmpaares ein erstes Geberelement (28) und am anderen Bügelarm (5, 6) jedes Bügelarmpaares ein zweites Geberelement (8) vorgesehen ist.

4. Vorrichtung nach Anspruch 3, dadurch gekennzeichnet, daß an den Bügelarmen (27) des unteren Bügels (3) die ersten Geberelemente (28) und an den Bügelarmen (5, 6) des oberen Bügels (1) die zweiten Geberelemente (8) vorgesehen sind.

5. Vorrichtung nach einem der Ansprüche 1 bis 4, dadurch gekennzeichnet, daß die Lichtstrecken an jedem zweiten Geberelement (8) in einer gemeinsamen Ebene liegen.

6. Vorrichtung nach einem der Ansprüche 2 bis 5, dadurch gekennzeichnet, daß jeder der wenigstens zwei Meßgeber eine dritte Meßstrecke mit einem als Streuscheibe ausgebildeten optischen Filter (33) aufweist.

7. Vorrichtung nach einem der Ansprüche 1 bis 6, dadurch gekennzeichnet, daß die Lichtstrecken eines zweiten Geberelementes (8) an einem Teil dieses Geberelementes gebildet sind, welcher gegenüber dem übrigen Teil dieses zweiten Geberelementes vorzugsweise in zwei senkrecht zueinander verlaufenden Achsrichtungen (A, B) verstellbar ist.

8. Vorrichtung nach einem der Ansprüche 3 bis 6, dadurch gekennzeichnet, daß wenigstens ein zweites Geberelementes (8) an einem Teil eines Bügelarmes (5, 6) vorgesehen ist, welcher vorzugsweise in zwei senkrecht zueinander verlaufenden Achsrichtungen (A, B) an dem restlichen Teil dieses Bügelarms (5, 6) verstellbar befestigt ist.

9. Vorrichtung nach einem der Ansprüche 2 bis 8, dadurch gekennzeichnet, daß die zweiten Geberelemente (8) gegen Halteblöcke (43) austauschbar sind, die jeweils eine an einem Ende mit einem Kugelgelenk (44, 46) im Halteblock gehaltene Stange (45) aufweist, wobei der Mittelpunkt (M) des Kugelgelenks (44, 46) an einem Raumpunkt liegt, der vor dem Austauschen des betreffenden zweiten Geberelementes (8) gegen den Halteblock (43) zwischen der Lichtquelle (16) und dem Lichtdetektor der dritten Meßstrecke lag.

**Revendications**

1. Dispositif pour la détermination tridimensionelle du mouvement relatif entre un premier et un deuxième corps, de préférence pour la détermination tridimensionnelle du mouvement de la mâchoire inférieure ou des articulations de la mâchoire inférieure d'un patient, comportant au moins deux transmetteurs de mesure prévus à une certaine distance l'un de l'autre et formés chacun d'un premier élément transmetteur (28) et d'un deuxième élément transmetteur (8) mobiles l'un par rapport à l'autre, le premier élément transmetteur (28) de chaque transmetteur de mesure pouvant être fixé au premier corps, de préférence à la mâchoire inférieure du patient, et le deuxième élément transmetteur (8) de chaque transmetteur de mesure pouvant être fixé au deuxième corps, de préférence au crâne du patient, et comportant en outre sur chaque transmetteur de mesure une première et une deuxième lignes de mesure formées chacune entre le premier et le deuxième éléments transmetteurs (28, 8) et servant la première à la détermination du mouvement relatif entre le premier et le deuxième éléments transmetteurs (28, 8) du transmetteur de mesure correspondant sur l'axe horizontal (A) et la deuxième à la détermination du mouvement relatif entre le premier et le deuxième éléments transmetteurs (28, 8) du transmetteur de mesure correspondant sur l'axe vertical (B), au moins et des deux transmetteurs de mesure présentant une troisième ligne de mesure également formée entre son premier et son deuxième éléments transmetteurs (28, 8) et servant à la détermination du mouvement relatif entre ces premier et deuxième éléments transmetteurs (28, 8) sur un axe transversal (C) perpendiculaire à l'axe horizontal (A) et à l'axe vertical (B), caractérisé en ce que les lignes de mesure sont formées de lignes lumineuses prévues sur les deuxièmes éléments transmetteurs (8) et présentant chacune un détecteur de lumière (18, 19, 20) avec source lumineuse (15, 16, 17) prévue à une certaine distance de celui-ci, et de filtres optiques (31, 32, 33) prévus sur les premiers éléments transmetteurs (28) et placés chacun sur une ligne lumineuse, en ce qu'au moins un filtre optique (33) est un diffuseur dont le plan est perpendiculaire à la direction d'axe dans laquelle le mouvement relatif entre le premier et le deuxième éléments transmetteurs (28, 8) est déterminé par la ligne de mesure correspondante, en ce que les autres filtres optiques (31, 32) sont des coins de transmission dont la densité augmente dans la direction d'axe dans laquelle le mouvement relatif entre le premier et le deuxième éléments transmitteurs (28, 8) est déterminé par la ligne de mesure correspondante, en ce que les filtres optiques (31, 32, 33) prévus sur chaque premier élément transmetteur (28) sont placés dans un plan commun, et en ce que les lignes lumineuses prévues sur chaque deuxième élément transmetteur (8) sont parallèles entre elles et parallèles aux lignes lumineuses prévues sur le deuxième élément transmetteur (8) de l'autre des deux transmetteurs de mesure.

2. Dispositif selon la revendication 1, caractérisé en ce que les filtres optiques (31, 32) de la première et de la deuxième lignes de mesure de chaque transmetteur de mesure sont des coins de transmission et en ce que le filtre optique (33) de la troisième ligne de mesure est un diffuseur.

3. Dispositif selon l'une des revendications 1 et 2, caractérisé en ce qu'en particulier dans le cas de son utilisation pour la détermination tridimensionnelle du mouvement de la mâchoire inférieure ou des articulations de celle-ci, il est prévu un étrier inférieur (3) à deux branches (27) pouvant être fixé à la mâchoire inférieure et un étrier supérieur (1) également à deux branches (5, 6) pouvant être fixé au crâne, en ce que chaque branche (5, 6) de l'étrier supérieur (1) forme avec une branche (27) de l'étrier inférieur (3) une paire de branches, et en ce qu'un premier élément transmetteur (28) est prévu sur une branche (27) de chaque paire de branches et un deuxième élément transmetteur (8) est prévu sur l'autre branche (5, 6) de chaque paire de branches.

4. Dispositif selon la revendication 3, caractérisé en ce que les premiers éléments transmetteurs (28) sont prévus sur les branches (27) de l'étrier inférieur (3) et les deuxièmes éléments transmetteurs (8) sont prévus sur les branches (5, 6) de l'étrier supérieur (1).

5. Dispositif selon l'une des revendications 1 à 4, caractérisé en ce que les lignes lumineuses prévues sur chaque deuxième élément transmetteur (8) sont dans un plan commun.

6. Dispositif selon l'une des revendications 2 à 5, caractérisé en ce que chacun des deux ou plus de deux transmetteurs de mesure présente une troisième ligne de mesure comportant un filtre optique (33) constitué d'un diffuseur.

7. Dispositif selon l'une des revendications 1 à 6, caractérisé en ce que les lignes lumineuses d'un deuxième élément transmetteur (8) sont formées sur une partie de cet élément transmetteur qui est mobile par rapport à la partie restante de celui-ci de préférence dans deux directions d'axes perpendiculaires (A, B).

8. Dispositif selon l'une des revendications 3 à 6, caractérisé en ce qu'au moins un deuxième élément transmetteur (8) est prévu sur une partie d'une branche d'étrier (5, 6) qui est fixée mobile de préférence dansd deux directions d'axe perpendiculaires (A, B) sur la partie restante de cette branche d'étrier (5, 6).

9. Dispositif selon l'une des revendications 2 à 8, caractérisé en ce que les deuxièmes éléments transmetteurs (8) peuvent être remplacés par des blocs de fixation (43) qui présentent chacun une tige (45) qui y est fixée à une extrémité par une articulation sphérique (44, 46), le centre (M) de cette articulation sphérique (44, 46) étant en un point de l'espace qui, avant le remplacement du deuxième élément transmetteur (8) par le bloc de fixation (43), était situé entre la source lumineuse (16) et le détecteur de lumière de la troisième ligne de mesure.

**Claims**

1. An apparatus for the three-dimensional determination of the relative movement between a first and a second body, preferably for the three-dimensional determination of the movement of the mandible or the mandibular joints of a patient, having at least two sensors provided at a spatial distance from one another, each of which is formed by a first sensor element (28) and by a second sensor element (8) which are movable relative to one another and of which the first element (28) of each sensor can be fixed on the first body, preferably on the mandible of the patient, and the second element (8) of each sensor can be fixed on the second body, preferably on the cranium of the patient, and having having a first and a second measurement path on each sensor which are formed in each case between the first and second sensor element (28) and of which the first measurement path is used to determine the relative movement between the first and the second sensor element (28, 8) of the respective sensor in the horizontal axis (A) and the second measurement path is used to determine the relative movement between the first and the second sensor element (28, 8) of the respective sensor in the vertical axis (B), at least one of the two sensors comprising a third, additional measurement path which is likewise formed between the first and the second sensor element (28, 8) of the said sensor and which is used to determine the relative movement between the first and the second sensor element (28, 8) of the said sensor comprising the third measurement path in a transverse axis (C) which extends perpendicularly to the horizontal axis (A) and perpenducularly to the vertical axis (B), characterized in that the measurement paths are formed by light paths, which are provided on the second sensor elements (28) and each of which comprises a light detector (18, 19, 20) with a light source (15, 16, 17) provided at a distance therefrom, and by optical filters (31, 32, 33) which are provided on the first sensor elements (8) and each of which is disposed in each case in a light path, at least one optical filter (33) is a diffusor disc which is positioned with its plane perpendicular to the axial direction in which the relative movement between the first and the second sensor element (28, 8) is determined by the respective measurement path, the remaining optical filters (31, 32) are formed as transmission wedges with a filter thickness increasing in the axial direction in which the relative movement between the first and the second sensor element (28, 8) is determined by the respective measurement path, the optical filters (31, 32, 33) on each first sensor element (28) are arranged in a common plane, and the light paths on each second sensor element (8) are arranged parallel to one another and parallel to the light paths on the second sensor element (8) of the other of the two sensors in each case.

2. An apparatus according to Claim 1, characterized in that the optical filters (31, 32) of the first and the second measurement path of each sensor are formed as transmission wedges, and the optical filter (33) of the third measurement path is a diffusor disc.

3. An apparatus according to Claim 1 or 2, characterized in that, particularly when used for the three-dimensional determination of the movement of the mandible or the mandibular joints, a lower frame (3) capable of being fixed to the mandible and having two frame arms (27) and an upper frame (1) capable of being fixed to the cranium and likewise having two frame arms (5, 6) are provided, one frame arm (5, 6) of the upper frame (1) forms a pair of frame arms in each case with one frame arm (27) of the lower frame (3), and a first sensor element (28) is provided on one frame arm (27) of each pair of frame arms and a second sensor element (8) is provided on the other frame arm (5, 6) of each pair of frame arms.

4. An apparatus according to Claim 3, characterized in that the first sensor elements (28) are provided on the frame arms (27) of the lower frame (3) and the second sensor elements (8) are provided on the frame arms (5, 6) of the upper frame (1).

5. An apparatus according to any one of Claims 1 to 4, characterized in that the light paths on each second sensor element (8) are situated in a common plane.

6. An apparatus according to any one of Claims 2 to 5, characterized in that each of the sensors — of which there are at least two — has a third measurement path with an optical filter (23) formed as a diffusor disc.

7. An apparatus according to any one of Claims 1 to 6, characterized in that the light paths of a second sensor element (8) are formed on a part of the said sensor element which is adjustable realtive to the remaining part of the said sensor element, preferably in two axial directions (A, B) extending perpendicularly to one another.

8. An apparatus according to any one of Claims 3 to 6, characterized in that at least one second sensor element (8) is provided on a part of a frame arm (5, 6) which is secured on the remain-

0 111 215

ing part of the said frame arm (5, 6) so as to be adjustable preferably in two axial directions (A, B) extending perpendicularly to one another.

9. An apparatus according to any one of Claims 2 to 8, characterized in that the second sensor elements (8) can be replaced by holding blocks (43) which comprise in each case a rod (45) held at one end in the holding block by a ball-and-socket joint (44, 46), the centre point (M) of the ball-and-socket joint (44, 46) being situated at a spatial point which before the replacement of the respective second sensor element (8) by the holding block (43) lay between the light source (16) and the light detector of the third measurement path.

Fig.1

Fig.5

7    5'(6')    37    10    5"(6")

A

1

38    9

Fig.2

B    8

Fig.3

14    13    28
15
16    8
22    18
21    19
12    20
17    11
C    27

Fig.4

31

B'    28

27    33

A'    29

32    30

Fig. 6

7 7

4

39

42

Fig. 8

9

43

47

M

45 46

40 41

44

Fig. 7

2

45 49 50 49 43

43

45

50

45

48

6 5

4

**0 111 215**

Fig.9

Fig.10

Fig.11

4